# FASCICULE DE BREVET EUROPEEN

(11) **EP 3 201 742 B1**
(45) Date de publication et mention de la délivrance du brevet: **26.09.2018**
(21) Numéro de dépôt: 15781390.8
(22) Date de dépôt: 29.09.2015
(51) Int. Cl.: G06F 3/041, G06F 3/044, B60K 35/00, B60K 37/06, G01D 3/036, G01D 5/24

(54) **DISPOSITIF ET PROCÉDÉ DE COMMANDE POUR VÉHICULE AUTOMOBILE**
VORRICHTUNG UND VERFAHREN ZUR KRAFTFAHRZEUGSTEUERUNG
MOTOR VEHICLE CONTROL DEVICE AND METHOD

(30) Priorité: 30.09.2014 FR 1402204
(43) Date de publication de la demande: 09.08.2017
(73) Titulaire: DAV, 94046 Créteil Cedex (FR)
(72) Inventeur: RAZUREL, Guy, 94046 Créteil Cedex (FR); PITTION, Gilles, 94046 Créteil Cedex (FR); BARATHON, Philippe, 94046 Créteil Cedex (FR); TASPINAR, Ertugrul, 94046 Créteil Cedex (FR)
(74) Mandataire: Delplanque, Arnaud
(86) Numéro de dépôt international: PCT/FR2015/052591
(87) Numéro de publication internationale: WO 2016/051070

(56) Documents cités:
- EP-A1- 1 881 605
- WO-A1-2014/113542

## Description

La présente invention concerne un dispositif de commande pour la commande d'au moins une fonction d'un organe de véhicule automobile, tel que l'ouverture et/ou la fermeture d'un ouvrant. L'invention concerne également un procédé de commande d'un tel dispositif.

Dans l'habitacle d'une automobile, les surfaces tactiles sont de plus en plus présentes. Les surfaces tactiles sont généralement configurées pour être activées par un ou plusieurs doigts ou en utilisant un stylet. Elles remplacent les interrupteurs classiques pour commander certaines fonctions. Les surfaces tactiles présentent l'avantage d'être épurées et de ne comporter généralement aucun relief. Elles font généralement appel à une technologie capacitive. Tout objet métallique ayant des propriétés ferromagnétiques, tel que des clés, un téléphone portable, positionné proche de la surface de détection capacitive peut donc influencer son comportement (non activation, activation intempestive, fonctionnement aléatoire). Il existe donc un besoin de sécuriser de tels systèmes de commande, en particulier pour éviter la prise en compte de commandes non désirées.

On connaît notamment des documents WO2014/113542A1 et EP 1 881 605A1 des dispositifs permettant de répondre partiellement aux inconvénients précédents.

Un des buts de la présente invention est de proposer un dispositif et un procédé de commande sécurisés en particulier permettant de ne pas prendre en compte les commandes non désirées.

A cet effet, l'invention a pour objet un dispositif de commande pour la commande d'au moins une fonction d'un organe de véhicule automobile, comprenant une surface de détection capacitive configurée pour détecter une commande manuelle d'un utilisateur, caractérisé en ce qu'il comporte en outre un dispositif de détection d'objets ayant des propriétés ferromagnétiques, ledit dispositif de détection comprenant :
- au moins un dispositif de génération d'un champ magnétique configuré pour générer un champ magnétique au niveau de la surface de détection capacitive,
- au moins un dispositif de mesure du champ magnétique généré par le dispositif de génération d'un champ magnétique, et
- un dispositif de contrôle de la commande connecté au dispositif de mesure et à la surface de détection capacitive et configuré pour contrôler le signal de commande émis par la surface de détection capacitive en fonction du champ magnétique mesuré par le dispositif de mesure au cours de la détection de la commande.

Les dispositifs de génération d'un champ magnétique et de mesure n'ont pas d'influence sur le principe de détection. Ainsi, le dispositif de mesure peut détecter la présence d'un objet métallique ayant des propriétés ferromagnétiques et donner l'information au dispositif de contrôle de la commande qui prendra les mesures appropriées telle que l'inhibition de la commande. Cela permet de ne pas prendre en compte certaines commandes non désirées, lorsqu'elles sont effectuées par un objet autre que la main actionnant la surface de détection capacitive.

Selon une ou plusieurs caractéristiques du dispositif de commande, prise seule ou en combinaison,
- le dispositif de génération d'un champ magnétique comporte un aimant permanent,
- le dispositif de mesure comporte une sonde à effet Hall,
- ledit dispositif de détection comporte une pluralité de dispositifs de mesure agencés à distance les uns des autres. Cela permet de préciser les dimensions de l'objet métallique ayant des propriétés ferromagnétiques détecté.
- le dispositif de mesure et/ou le dispositif de génération d'un champ magnétique sont agencés à l'arrière de la surface de détection capacitive, du côté opposé à celui destiné à détecter une commande,
- ledit dispositif de détection comporte un élément ferromagnétique s'étendant entre le dispositif de génération d'un champ magnétique et le dispositif de mesure, pour guider les lignes de champ magnétique vers le dispositif de mesure.
- le dispositif de commande est configuré pour commander l'ouverture et/ou la fermeture d'ouvrants du véhicule automobile.

L'invention a aussi pour objet un procédé de commande d'au moins une fonction d'un organe de véhicule automobile au moyen d'un dispositif de commande tel que décrit précédemment, comportant une étape pour détecter une commande par un élément extérieur et émettre un signal de commande, caractérisé en ce qu'il comporte également des étapes pour :
- générer un champ magnétique au niveau de la surface de détection capacitive,
- contrôler le signal de commande émis par la surface de détection capacitive en fonction du champ magnétique mesuré au niveau de la surface de détection capacitive lors de la détection de la commande.

Selon une ou plusieurs caractéristiques du procédé de commande, prise seule ou en combinaison,
- le signal de commande émis par la surface de détection capacitive est pris en compte lorsque le champ magnétique mesuré au cours de la détection de la commande est inférieur à un seuil prédéterminé,
- le signal de commande émis par la surface de détection capacitive génère un mode dégradé de la commande lorsque le champ magnétique mesuré au cours de la détection de la commande est supérieur à un seuil prédéterminé. Ce mode dégradé peut par exemple être une réalisation partielle de la commande, nécessitant que l'utilisateur réitère plusieurs fois le contact pour parvenir à effectuer entièrement la commande. L'utilisateur est ainsi alerté d'un dysfonctionnement du dispositif de commande mais peut quand même poursuivre l'exécution de la commande.
- un signal d'alerte ou de diagnostic est émis lorsque le champ magnétique mesuré au cours de la détection de la commande est supérieur à un seuil prédéterminé.

D'autres caractéristiques et avantages de l'invention ressortiront de la description suivante, donnée à titre d'exemple et sans caractère limitatif, en regard des dessins annexés sur lesquels :
- la figure 1 montre des éléments d'un dispositif de commande, en particulier la surface de détection capacitive, lors d'un test de sécurisation, dit « test de la sphère »,
- la figure 2 représente le dispositif de commande de la Figure 1, à l'état désassemblé,
- la figure 3 montre une vue similaire à la figure 2 après le montage d'un élément ferromagnétique dans le boîtier,
- la figure 4 montre une vue schématique et de côté d'un dispositif de commande en fonctionnement,
- la figure 5 montre le dispositif de commande de la figure 3, à l'état assemblé, en fonctionnement et sur lequel on a disposé de la limaille de fer,
- la figure 6 est une vue schématique similaire à la figure 4 lors du test de la sphère,
- la figure 7 est une vue similaire à la figure 4 avec une autre position de la sphère, et
- la figure 8 est une vue similaire aux figures 6 et 7 avec une autre position de la sphère.

Sur toutes les figures, les mêmes éléments portent les mêmes numéros de référence.

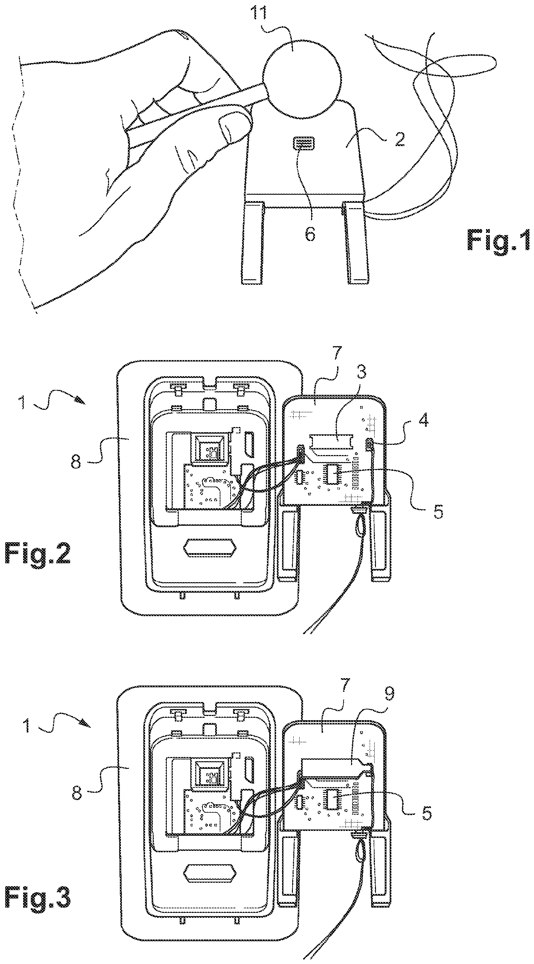

Les figures 1 à 3 représentent un exemple de réalisation d'un dispositif de commande 1 pour véhicule automobile, par exemple agencé dans le plafonnier ou la console centrale de l'habitacle entre les sièges conducteur et passager.

Le dispositif de commande 1 permet à un utilisateur de commander au moins une fonction d'un organe du véhicule automobile, tel que l'ouverture et/ou la fermeture d'un ouvrant, comme le toit, les vitres, des cloisons, le coffre, les portes du véhicule ou la trappe à essence du véhicule.

Le dispositif de commande 1 comporte une surface de détection capacitive 2 et un dispositif de détection d'objets ayant des propriétés ferromagnétiques.

Le dispositif de détection d'objets ayant des propriétés ferromagnétiques comporte au moins un dispositif de génération d'un champ magnétique 3, au moins un dispositif de mesure 4 du champ magnétique généré et un dispositif de contrôle de la commande 5 connecté au dispositif de mesure 4 et à la surface de détection capacitive 2.

La surface de détection capacitive 2 est configurée pour détecter une approche ou un contact de la surface par un élément extérieur, tel qu'un ou plusieurs doigts d'un utilisateur, et émettre un signal de commande pour la commande d'au moins une fonction lorsqu'une commande manuelle est détectée.

La surface de détection capacitive 2 comporte un capteur capacitif, tel qu'une antenne, par exemple gravée sur une carte électronique 7 du dispositif de commande 1, telle qu'une carte PCB ou « Printed Circuit Board ». La carte électronique 7 est par exemple montée dans un boitier 8 du dispositif de commande 1, par exemple en plastique, couvrant l'antenne. On comprend ainsi que la surface du boîtier 8 forme la surface de détection capacitive 2.

Le dispositif de génération d'un champ magnétique 3 comporte par exemple un aimant permanent. Le dispositif de génération d'un champ magnétique 3 est configuré pour générer un champ magnétique au niveau de la surface de détection capacitive 2, c'est dire dans un espace défini par la surface de détection capacitive 2 et l'épaisseur devant la surface de détection capacitive 2 de l'ordre de quelques centimètres, par exemple inférieure à deux centimètres.

Le dispositif de mesure 4 comporte par exemple une sonde à effet Hall. On choisit par exemple les sondes à effet Hall dont la tension de sortie varie proportionnellement avec la valeur de l'induction reçue. Une pluralité de dispositifs de mesure 4 sont par exemple agencés à distance les uns des autres pour la mesure du champ magnétique en différents endroits de la surface de détection capacitive 2.

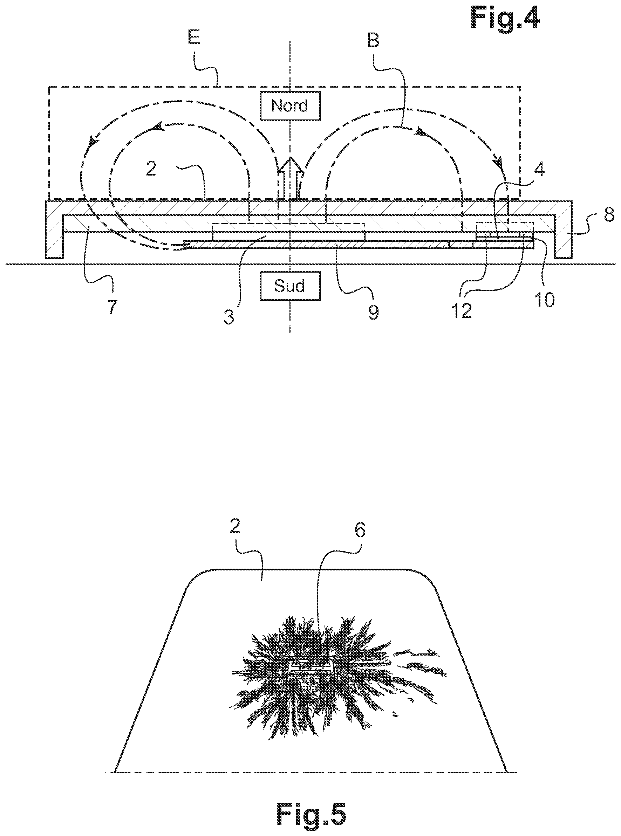

Les dispositifs de mesure 4 et/ou de génération d'un champ magnétique 3 sont par exemple agencés à l'arrière de la surface de détection capacitive 2, du côté opposé à celui destiné à détecter une commande. Par exemple et comme visible sur les figures 1 et 5, le dispositif de génération d'un champ magnétique 3 est agencé à l'arrière d'un pictogramme 6.

Le dispositif de mesure 4 et/ou de génération d'un champ magnétique 3 sont par exemple agencés sur la carte électronique 7 portant par exemple un dispositif de rétroéclairage du pictogramme 6 et des pistes électroniques reliant notamment les terminaisons 12 du dispositif de mesure 4 au dispositif de contrôle de la commande 5, par exemple sur le côté opposé de celui portant l'antenne.

On peut prévoir en outre que le dispositif de détection comporte un élément ferromagnétique 9, tel qu'en fer doux, pour guider les lignes de champ magnétique B vers le dispositif de mesure 4.

L'élément ferromagnétique 9 présente par exemple la forme d'une plaquette allongée. Il s'étend entre le dispositif de génération d'un champ magnétique 3 et le dispositif de mesure 4. On dispose ainsi par exemple la plaquette en contact contre l'aimant permanent du dispositif de génération d'un champ magnétique 3. Un isolant électrique 10 de faible épaisseur peut en outre être disposé entre l'élément ferromagnétique 9 et les terminaisons 12 du dispositif de mesure 4 (figure 4).

Le dispositif de contrôle de la commande 5 comporte par exemple un microprocesseur, par exemple monté sur la carte électronique 7 (ou déporté). Le dispositif de contrôle de la commande 5 est configuré pour contrôler le signal de commande émis par la surface de détection capacitive 2 en fonction du champ magnétique mesuré par le dispositif de mesure 4 au cours de la détection de la commande.

Par exemple, le signal de commande émis par la surface de détection capacitive 2 est pris en compte lorsque le champ magnétique mesuré par le dispositif de mesure 4 au cours de la détection de la commande est inférieur à un seuil prédéterminé.

Le dispositif de contrôle de la commande 5 est en outre destiné à être connecté à une unité de traitement, tel qu'un ordinateur de bord, pour lui transmettre le signal de commande. Le signal de commande ainsi transmis sera ensuite interprété par l'unité de traitement, afin d'exécuter la fonction commandée au niveau de la surface de détection capacitive 2, telle que la commande de fermeture ou d'ouverture d'ouvrants du véhicule automobile.

Le dispositif de contrôle de la commande 5 peut ainsi par exemple, transmettre ou non le signal de commande à l'unité de traitement et la fonction correspondante est ou n'est pas effectuée.

Selon un autre exemple, le signal de commande émis par la surface de détection capacitive 2 génère un mode dégradé de la commande lorsque le champ magnétique mesuré au cours de la détection de la commande est supérieur à un seuil prédéterminé. Ce mode dégradé peut par exemple être une réalisation partielle de la commande, nécessitant que l'utilisateur réitère plusieurs fois le contact pour parvenir à effectuer la commande en son entier. L'utilisateur est ainsi alerté d'un dysfonctionnement du dispositif de commande 1 mais peut quand même poursuivre l'exécution de la commande.

On peut en outre prévoir qu'un signal d'alerte ou de diagnostic soit émis lorsque le champ magnétique mesuré au cours de la détection de la commande est supérieur à un seuil prédéterminé, par exemple en émettant ou non un signal d'alerte ou de diagnostic ou en transmettant ou non un signal d'alerte ou de diagnostic à l'unité de traitement.

En utilisation, le dispositif de génération d'un champ magnétique 3 génère un champ magnétique au niveau de la surface de détection capacitive 2, dans l'espace destiné à être traversé par un élément extérieur venant au contact de la surface de détection capacitive 2. Ainsi, on a représenté les lignes de champ du champ magnétique B en pointillés sur la figure 4. Les lignes de champ magnétique B sont également partiellement visibles grâce à la limaille de fer répandue sur la surface de détection capacitive 2 en figure 5.

Le dispositif de mesure 4 mesure le champ magnétique ainsi généré, permettant par exemple de déterminer les valeurs de champ magnétique définissant l'absence d'objets métalliques ayant des propriétés ferromagnétiques pour lequel la commande peut être prise en compte.

Lorsque l'utilisateur effectue une commande, il pose sa main, en particulier un doigt sur la surface de détection capacitive 2. A ce moment, la surface de détection capacitive 2 détecte une commande et émet un signal de commande.

Le dispositif de contrôle de la commande 5 reçoit le signal de commande issu de la surface de détection capacitive 2, ainsi que le signal relatif au champ magnétique mesuré par le dispositif de mesure 4. En fonction de ces signaux, le dispositif de contrôle de la commande 5 peut par exemple, transmettre ou non le signal de commande à l'unité de traitement et la fonction correspondante est ou n'est pas effectuée.

Par exemple, le dispositif de contrôle de la commande 5 va :
- si la valeur du champ magnétique mesuré par le dispositif de mesure 4 est comprise dans un intervalle prédéterminé lorsqu'aucun élément extérieur n'est détecté; transmettre les signaux de commande à l'unité de traitement actionnant les fonctions à commander; et
- si la valeur du champ magnétique mesuré par le dispositif de mesure 4 sort de l'intervalle prédéterminé, ne pas transmettre le signal de commande issu de la surface de détection capacitive 2 à l'unité de traitement évitant ainsi la prise en compte d'une commande non désirée.

La main de l'utilisateur ne faisant pas varier le signal de champ magnétique, le dispositif de contrôle de la commande 5 peut donc prendre en compte le signal de commande reçu par la surface de détection capacitive 2 en le transmettant à l'unité de traitement.

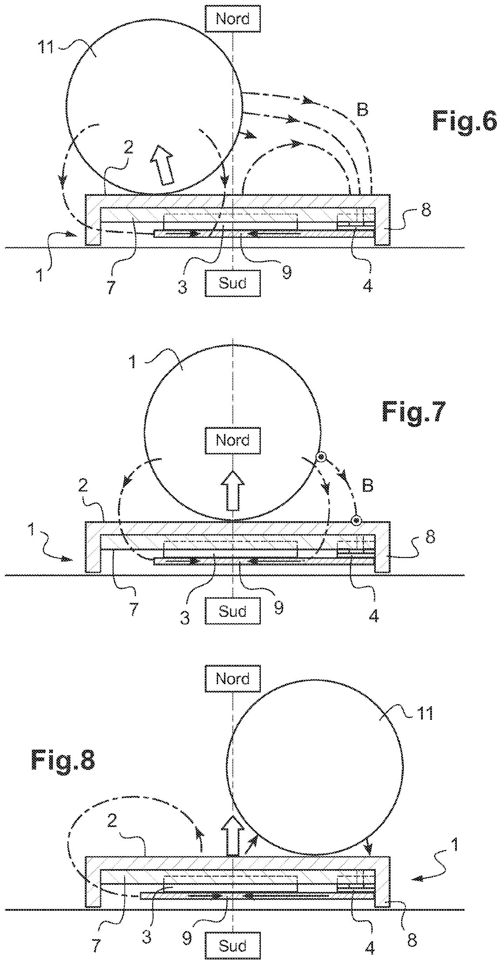

En revanche, tout objet métallique ayant des propriétés ferromagnétiques, tel que les clés de l'utilisateur ou un téléphone portable, approchant de la surface de détection capacitive 2, dévie les lignes de champ B du dispositif de génération d'un champ magnétique 3, comme on peut le voir sur les figures 6, 7 et 8. La valeur du champ magnétique mesuré par le dispositif de mesure 4 est ainsi modifiée. Elle est plus élevée car l'objet métallique ayant des propriétés ferromagnétiques concentre les lignes de champ B qui sont mesurées par le dispositif de mesure 4. De cette manière, le dispositif de commande 1 permet de ne pas prendre en compte les commandes non désirées, par exemple provenant de contact de clés ou de téléphone portable sur la surface de détection capacitive 2.

Il est en outre possible de passer le test de la sphère conformément à la norme FMVSS 118. En effet, certaines normes notamment aux Etats Unis, prévoient que les systèmes de commande tactile notamment pour véhicules automobiles ne s'activent pas par erreur. Par exemple, la norme FMVSS 118 (Federal Motor Vehicle Safety Standard) des Etats Unis relative à la sécurisation de ce type de module de commande tactile, prévoit d'effectuer un test dit de la sphère. Dans ce test, une sphère 11 est appliquée contre un pavé tactile de commande de fenêtre, de cloison ou de toit, à une force ne dépassant pas 135 Newtons (30 livres). Lors de ce test, la fermeture de la fenêtre, la cloison ou le toit ne doit pas être actionnée. Ce test est illustré sur la figure 1 et les figures 6 à 8. La sphère 11 est en acier inoxydable, de rayon 20 mm +/- 0,2 mm et présente un fini de surface compris entre 8 et 4 micro pouces. La sphère 11 de ce test modélise les commandes non-désirées sur la surface de détection capacitive 2.

Lors de la réalisation du test de sphère sur le dispositif de commande 1, la sphère 11 en acier est appliquée contre la surface de détection capacitive 2 pour commander une fonction, telle que l'ouverture/fermeture d'une fenêtre, cloison ou toit. Au moment de l'approche de la sphère 11 en acier sur la surface de détection capacitive 2, la sphère 11 dévie les lignes de champ, modifiant la valeur du champ magnétique. Ce champ magnétique est mesuré par le dispositif de mesure 4 et, est transmis au dispositif de contrôle de la commande 5. De même, le signal de commande émis par la surface de détection capacitive 2 ayant détecté la sphère 11 est transmis au dispositif de contrôle de la commande 5. La mesure du champ magnétique indiquant qu'il dépasse le seuil prédéterminé, le dispositif de contrôle de la commande 5 ne prend pas en compte le signal de commande reçu par la surface de détection capacitive 2 en ne le transmettant pas à l'unité de traitement. Ainsi, avec une calibration ou une détermination suffisamment précise du seuil prédéterminé de champ magnétique, le dispositif de commande 1 permet de passer le test de la sphère conformément à la norme FMVSS 118.

## Revendications

1. Dispositif de commande pour la commande d'au moins une fonction d'un organe de véhicule automobile, comprenant une surface de détection capacitive (2) configurée pour détecter une commande manuelle d'un utilisateur, **caractérisé en ce qu'**il comporte en outre un dispositif de détection d'objets ayant des propriétés ferromagnétiques, ledit dispositif de détection comprenant :
- au moins un dispositif de génération d'un champ magnétique (3) configuré pour générer un champ magnétique au niveau de la surface de détection capacitive (2),
- au moins un dispositif de mesure (4) du champ magnétique généré par le dispositif de génération d'un champ magnétique (3), et
- un dispositif de contrôle de la commande (5) connecté au dispositif de mesure (4) et à la surface de détection capacitive (2) et configuré pour contrôler le signal de commande émis par la surface de détection capacitive (2) en fonction du champ magnétique mesuré par le dispositif de mesure (4) au cours de la détection de la commande.

2. Dispositif de commande selon la revendication précédente, dans lequel le dispositif de génération d'un champ magnétique (3) comporte un aimant permanent.

3. Dispositif de commande selon l'une des revendications précédentes, dans lequel le dispositif de mesure (4) comporte une sonde à effet Hall.

4. Dispositif de commande selon l'une des revendications précédentes, **caractérisé en ce que** ledit dispositif de détection comporte une pluralité de dispositifs de mesure (4) agencés à distance les uns des autres.

5. Dispositif de commande selon l'une des revendications précédentes, **caractérisé en ce que** le dispositif de mesure (4) et/ou le dispositif de génération d'un champ magnétique (3) sont agencés à l'arrière de la surface de détection capacitive (2), du côté opposé à celui destiné à détecter une commande.

6. Dispositif de commande selon l'une des revendications précédentes, **caractérisé en ce que** ledit dispositif de détection comporte un élément ferromagnétique (9) s'étendant entre le dispositif de génération d'un champ magnétique (3) et le dispositif de mesure (4), pour guider les lignes de champ magnétique (B) vers le dispositif de mesure (4).

7. Dispositif de commande selon l'une des revendications précédentes, **caractérisé en ce qu'**il est configuré pour commander l'ouverture et/ou la fermeture d'ouvrants du véhicule automobile.

8. Procédé de commande d'au moins une fonction d'un organe de véhicule automobile au moyen d'un dispositif de commande selon l'une des revendications précédentes, comportant une étape pour détecter une commande par un élément extérieur et émettre un signal de commande, **caractérisé en ce qu'**il comporte également des étapes pour :
- générer un champ magnétique au niveau de la surface de détection capacitive (2),
- contrôler le signal de commande émis par la surface de détection capacitive (2) en fonction du champ magnétique mesuré au niveau de la surface de détection capacitive lors de la détection de la commande.

9. Procédé de commande selon la revendication précédente, **caractérisé en ce que** le signal de commande émis par la surface de détection capacitive (2) est pris en compte lorsque le champ magnétique mesuré au cours de la détection de la commande est inférieur à un seuil prédéterminé.

10. Procédé de commande selon l'une des revendications 8 ou 9, **caractérisé en ce que** le signal de commande émis par la surface de détection capacitive (2) génère un mode dégradé de la commande lorsque le champ magnétique mesuré au cours de la détection de la commande est supérieur à un seuil prédéterminé.

11. Procédé de commande selon l'une des revendications 8 à 10, **caractérisé en ce qu'**un signal d'alerte ou de diagnostic est émis lorsque le champ magnétique mesuré au cours de la détection de la commande est supérieur à un seuil prédéterminé.

## Patentansprüche

1. Steuervorrichtung zur Steuerung mindestens einer Funktion eines Elements eines Kraftfahrzeugs, umfassend eine kapazitive Detektionsfläche (2), die ausgelegt ist, eine manuelle Steuerung eines Benutzers zu detektieren,
**dadurch gekennzeichnet, dass** diese außerdem eine Vorrichtung zur Detektion von Objekten mit ferromagnetischen Eigenschaften umfasst, wobei die Detektionsvorrichtung umfasst:
- mindestens eine Vorrichtung (3) zur Erzeugung eines Magnetfelds, die ausgelegt ist, ein Magnetfeld auf der Ebene der kapazitiven Detektionsfläche (2) zu erzeugen,
- mindestens eine Vorrichtung (4) zur Messung des Magnetfelds, das von der Vorrichtung (3) zur Erzeugung eines Magnetfelds erzeugt wird, und
- eine Kontrollsteuervorrichtung (5), die mit der Messvorrichtung (4) und mit der kapazitiven Detektionsfläche (2) verbunden ist und ausgelegt ist, das Steuersignal, das von der kapazitiven Detektionsfläche (2) ausgegeben wird, als Funktion des Magnetfelds, das von der Messvorrichtung (4) während der Detektion der Steuerung gemessen wird, zu kontrollieren.

2. Steuervorrichtung nach dem vorhergehenden Anspruch,
wobei die Vorrichtung (3) zur Erzeugung eines Magnetfelds einen Permanentmagneten umfasst.

3. Steuervorrichtung nach einem der vorhergehenden Ansprüche,
wobei die Messvorrichtung (4) eine Hall-Sonde umfasst.

4. Steuervorrichtung nach einem der vorhergehenden Ansprüche,
**dadurch gekennzeichnet, dass** die Detektionsvorrichtung eine Vielzahl von Messvorrichtungen (4) umfasst, die in einer Distanz voneinander angeordnet sind.

5. Steuervorrichtung nach einem der vorhergehenden Ansprüche,
**dadurch gekennzeichnet, dass** die Messvorrichtung (4) und/oder die Vorrichtung (3) zur Erzeugung eines Magnetfelds hinter der kapazitiven Detektionsfläche (2) auf der Seite gegenüber jener angeordnet sind, die dazu bestimmt ist, eine Steuerung zu detektieren.

6. Steuervorrichtung nach einem der vorhergehenden Ansprüche,
**dadurch gekennzeichnet, dass** die Detektionsvorrichtung ein ferromagnetisches Element (9) umfasst, das sich zwischen der Vorrichtung (3) zur Erzeugung eines Magnetfelds und der Messvorrichtung (4) erstreckt, um die Linien des Magnetfelds (B) zur Messvorrichtung (4) zu führen.

7. Steuervorrichtung nach einem der vorhergehenden Ansprüche,
**dadurch gekennzeichnet, dass** diese ausgelegt ist, das Öffnen und/oder das Schließen der Türen des Kraftfahrzeugs zu steuern.

8. Verfahren zur Steuerung mindestens einer Funktion eines Elements eines Kraftfahrzeugs mit einer Steuervorrichtung nach einem der vorhergehenden Ansprüche, umfassend einen Schritt zur Detektion einer Steuerung durch ein externes Element und Ausgabe eines Steuersignals,
**dadurch gekennzeichnet, dass** dieses auch Schritte umfasst, um:
- ein Magnetfeld auf der Ebene der kapazitiven Detektionsfläche (2) zu generieren,
- das Steuersignal, das von der kapazitiven Detektionsfläche (2) ausgegeben wird, als Funktion des Magnetfelds, das auf der Ebene der kapazitiven Detektionsfläche während der Detektion der Steuerung gemessen wird, zu kontrollieren.

9. Steuerverfahren nach dem vorhergehenden Anspruch,
**dadurch gekennzeichnet, dass** das Steuersignal, das von der kapazitiven Detektionsfläche (2) ausgegeben wird, berücksichtigt wird, wenn das Magnetfeld, das während der Detektion der Steuerung gemessen wird, niedriger ist als eine vorherbestimmte Schwelle.

10. Steuerverfahren nach einem der Ansprüche 8 oder 9, **dadurch gekennzeichnet, dass** das Steuersignal, das von der kapazitiven Detektionsfläche (2) ausgegeben wird, einen eingeschränkten Steuermodus generiert, wenn das Magnetfeld, das während der Detektion der Steuerung gemessen wird, größer ist als eine vorherbestimmte Schwelle.

11. Steuerverfahren nach einem der Ansprüche 8 bis 10,
**dadurch gekennzeichnet, dass** ein Alarm- oder Diagnosesignal ausgegeben wird, wenn Magnetfeld, das während der Detektion der Steuerung gemessen wird, größer ist als eine vorherbestimmte Schwelle.

## Claims

1. Control device for controlling at least one function of an automotive vehicle member, comprising a capacitive detection surface (2) configured to detect a manual command from a user, **characterized in that** it additionally comprises a device for detecting objects having ferromagnetic properties, said detection device comprising:
- at least one magnetic field generation device (3), configured to generate a magnetic field at the capacitive detection surface (2);
- at least one device (4) for measuring the magnetic field generated by the magnetic field generation device (3); and
- a command monitoring device (5), connected to the measurement device (4) and to the capacitive detection surface (2) and configured to monitor the control signal transmitted by the capacitive detection surface (2) as a function of the magnetic field measured by the measurement device (4) during the detection of the command.

2. The control device as claimed in the preceding claim, in which the magnetic field generation device (3) comprises a permanent magnet.

3. The control device as claimed in either of the preceding claims, in which the measurement device (4) comprises a Hall effect probe.

4. The control device as claimed in one of the preceding claims, **characterized in that** said detection device comprises a plurality of measurement devices (4) arranged at a distance from one another.

5. The control device as claimed in one of the preceding claims, **characterized in that** the measurement device (4) and/or the magnetic field generation device (3) are positioned on the back of the capacitive detection surface (2), on the side opposite that intended to detect a command.

6. The control device as claimed in one of the preceding claims, **characterized in that** said detection device comprises a ferromagnetic element (9) extending between the magnetic field generation device (3) and the measurement device (4), in order to guide the magnetic field lines (B) toward the measurement device (4).

7. The control device as claimed in one of the preceding claims, **characterized in that** it is configured to control the opening and/or the closing of accesses of the automotive vehicle.

8. Method for controlling at least one function of an automotive vehicle member by means of a control device as claimed in one of the preceding claims, comprising a step for detecting a command by an exterior element and transmitting a control signal **characterized in that** it also comprises steps for:
- generating a magnetic field at the capacitive detection surface (2);
- monitoring the control signal transmitted by the capacitive detection surface (2) as a function of the magnetic field measured at the capacitive detection surface during the detection of the command.

9. The control method as claimed in the preceding claim, **characterized in that** the control signal transmitted by the capacitive detection surface (2) is heeded when the magnetic field measured during the detection of the command is below a predetermined threshold.

10. The control method as claimed in either of Claims 8 and 9, **characterized in that** the control signal transmitted by the capacitive detection surface (2) generates a downgraded mode of the command when the magnetic field measured during the detection of the command is above a predetermined threshold.

11. The control method as claimed in one of Claims 8 to 10, **characterized in that** a warning or diagnostic signal is transmitted when the magnetic field measured during the detection of the command is above a predetermined threshold.
